Europäisches Patentamt

European Patent Office

Office européen des brevets

(11) Veröffentlichungsnummer: **0 356 847**
**A2**

# (12) EUROPÄISCHE PATENTANMELDUNG

(21) Anmeldenummer: 89115321.5

(22) Anmeldetag: 19.08.89

(51) Int. Cl.⁵: **C09D 175/04 , C08F 299/06**

(30) Priorität: 01.09.88 DE 3829590

(43) Veröffentlichungstag der Anmeldung:
07.03.90 Patentblatt 90/10

(84) Benannte Vertragsstaaten:
**BE DE FR GB IT NL**

(71) Anmelder: **Wolff Walsrode Aktiengesellschaft**
**Postfach**
**D-3030 Walsrode 1(DE)**

(72) Erfinder: **Piepho, Michael, Dr.**
**Goethestrasse 42**
**D-3210 Elze(DE)**
Erfinder: **Hoppe, Lutz, Dr.**
**Am Badeteich 8**
**D-3030 Walsrode(DE)**
Erfinder: **Lühmann, Erhard, Dipl.-Ing.**
**Kastanienweg 2**
**D-3036 Bomlitz(DE)**

(74) Vertreter: **Zobel, Manfred, Dr. et al**
**c/o BAYER AG Konzernverwaltung RP**
**Patente Konzern**
**D-5090 Leverkusen 1 Bayerwerk(DE)**

(54) **Allylurethane und ihre Verwendung zur Herstellung von Lacken.**

(57) Verbesserte Allylurethane sind erhältlich durch Umsetzung eines Polyglykolgemisches mit einer Hydroxyallylverbindung und einem Isocyanat mit wenigstens zwei NCO-Gruppen.

EP 0 356 847 A2

## Allylurethane und ihre Verwendung zur Herstellung von Lacken

Die Erfindung bezieht sich auf neue Allylurethane une ihre Verwendung zur Herstellung von Lacken.

In der jüngeren Vergangenheit läßt sich in der Lackindustrie eine verstärkte Zuwendung zu umweltfreundlichen Produkten beobachten (vgl. z.B. O. Lückert, Emissionsarm Lackieren, C.R. Vincentz-Verlag, Hannover, 1987). Zur Erzielung zähharter Beschichtungen sind seit längerer Zeit Lackrohstoffe, die Urethanbausteine enthalten, bekannt. Bei der Erzeugung urethangruppenhaltiger Beschichtungen werden freie Isocyanate (Diisocyanate oder Isocyanatpräpolymere) mit verschiedenen Polyolkomponenten umgesetzt. Hierbei ist ein hoher technischer Sicherheitsaufwand notwendig. Zur Erzeugung hochwertiger Oberflächen werden polymerisierbare urethangruppenhaltige Acrylester eingesetzt (vgl. z.B. W. Fischer, Industrie-Lackierbetrieb, 55, 1987, Nr. 7, S. 245). Da derartige Produkte jedoch als physiologisch reizend gelten (siehe Deutsche Gefahrstoffverordnung vom 26. August 1986), ist zu ihrer sicheren Verarbeitung ebenfalls ein hoher anlagentechnischer Aufwand erforderlich.

Aus der US-A-4 416 750 (= CA 1 192 331) ist die Mitverwendung von inerten organischen Lösungsmitteln, die nach Applizierung der Beschichtungsmassen vor der chemischen Härtung der Bindemittel verdunsten und dadurch die Luft belasten, bekannt.

Die in der US-A-3 824 104 beschriebenen Urethanallylether eignen sich aufgrund ihrer Neigung zur Vergilbung, insbesondere in Kombination mit anderen Lackrohstoffen, wie z.B. Nitrocellulose, für viele Lackieranwendungen nicht. Außerdem härten die Produkte entsprechend der US-A 3 824 104 nur unzureichend, wenn man die Allylurethane mittels UV-Strahlung zu härten versucht.

Aufgabe der vorliegenden Erfindung war es daher, polymerisierbare Verbindungen bereitzustellen, die als Lackbindemittel geeignet sind, insbesondere zum Herstellen zäher und harter sowie offenporiger Holzüberzüge und die nur wenig in den Holzuntergrund penetrieren.

Gegenstand der Erfindung sind in organischen Lösungsmitteln lösliche Allylurethane aus jeweils wenigstens einer Allylverbindung, einem Polyol und einem Isocyanat, dadurch gekennzeichnet, daß die Allylurethane erhältlich sind durch Umsetzung von

A) einem Polyglykolgemisch I oder dessen Umsetzungsprodukt mit einer Polycarbonsäure II oder eines Derivates IIa davon mit

B) einer Hydroxyallylverbindung III und einem Isocyanat IV mit wenigstens zwei NCO-Gruppen.

Das Allylurethan ist vorzugsweise nicht ionisch.

In einer bevorzugten Ausführungsform wird das oben angegebene Polyglykolgemisch I mit einer nicht aromatischen α,ß-ungesättigten Carbonsäure mit wenigstens zwei Carboxylgruppen, insbesondere einer Dicarbonsäure umgesetzt.

Die erfindungsgemäßen wasserdispergierbaren Allylurethane weisen vorzugsweise folgende Eigenschaften auf:
Molekulargewicht: 800 - 10.000 g/mol.
Viskosität (Dimension: mPa.s), gemessen gemäß DIN 53 019 T 1: >2.000 in unverdünntem Zustand bei 20°C.

Überraschenderweise wurde gefunden, daß die erfindungsgemäßen Allylurethane Beschichtungen mit guter Oberflächeneigenschaft ergeben, z.B. Kratzfestigkeit, Porenfluß und Lichtbeständigkeit. Außerdem sind die erfindungsgemäßen Produkte physiologisch unbedenklich.

Besonders bevorzugte erfindungsgemäße Allylurethane sind erhältlich durch Umsetzung des Vorproduktes A, welches seinerseits erhältlich ist durch Umsetzung von

1. 0,03 - 0,1 Mol Polyethylenglykol mit einem Molekulargewicht von 200 - 800, gegebenenfalls verzweigt, vorzugsweise
0,04 -0,07 Mol Polyethylenglykol 300 - 600

2. 0,00 - 0,3 Mol Polypropylenglykol 200 - 1000 bzw. verzweigte Polypropylenglykole, vorzugsweise
0,05 - 0,2 Mol

3. 0,0 - 0,25 Mol Polycarbonsäure oder Polycarbonsäureanhydrid, vorzugsweise
0,1 - 0,18 Mol.

Das Molekulargewicht ist für die Zwecke der vorliegenden Erfindung definiert als Gewichtsmittel $M_w$.

Das Vorprodukt A enthält nach Umsetzung der oben angegebenen Komponenten aufgrund eines stöchiometrischen Überschuß von Hydroxylgruppen gegenüber den Carboxylgruppen/OH-Endgruppen.

Die erfindungsgemäßen Allylurethane sind nun erhältlich durch weitere Umsetzung des Vorproduktes A in einem zweiten Reaktionsschritt B. Hierbei werden vorzugsweise 0,15 Mol Hydroxylgruppen des Vorproduktes A umgesetzt mit

4. 0,05 - 0,35 Mol der Hydroxyallylverbindung III, insbesondere mit
0,1 - 0,2 Mol der Hydroxyallylverbindung III und

5. 0,1 - 0,5 Mol NCO-Gruppen der Isocyanatverbindung IV, inssondere mit
0,16 - 0,32 Mol NCO-Gruppen der Isocyanatvebindung IV, wobei durch komplette Umsetzung mit den Hydroxylgruppen kein Restgehalt an Isocyanatgruppen verbleibt.

Gegenstand der Erfindung ist weiterhin ein Verfahren zur Herstellung der erfindungsgemäßen Allylurethane durch Umsetzung oines Vorproduktes A, enthaltend das oben angegebene Polyglykolgemisch I und gegebenenfalls eine Polycarbonsäure II oder ein Derivat IIa davon mit

D) einer Hydroxyallylverbindung III und einem Isocyanat IV mit wenigstens zwei Isocyanatgruppen, wobei das erhaltene Allylurethan nicht ionisch ist.

Gegenstand der Erfindung ist weiterhin ein Lack, enthaltend die erfindungsgemäßen Allylurethane gelöst in einem organischen Lösungsmittel und ein Verfahren zur Lackierung starrer oder flexibler Substrate mit einem Lack, welcher ein erfindungsgemäßes Allylurethan enthält.

Bei der Herstellung des Vorproduktes A unter Verwendung einer Polycarbonsäure kondensiert man in der Schmelze (vergl. z.B. D. Braun, H. Cherdron, W. Kern, Praktikum der makromolekularen organischen Chemie, Hüthig-Verlag, Heidelberg, 3. Aufl., 1979, S. 69) verschiedene hydrophile und hydrophobe Polyalkylenglykole in Kombination mit Polycarbonsäuren bzw. den entsprechenden Anhydriden (bevorzugt Maleinsäureanhydrid) bei Temperaturen von ca. 150 bis 250° C, gegebenenfalls unter Vakuum.

Als Katalysatoren können konzentrierte Mineralsäuren wie Salzsäure oder Sulfonsäuren wie para-Toluolsulfonsäure verwendet werden.

Bevorzugte Polyglykole sind Polymerisate von Ethylenoxid oder Propylenoxid, wobei auch Pfropfpolymerisate von Propylenoxid auf mehrwertige Alkohole einsetzbar sind, d.h. verzweigte Polypropylenglykole. Geeignete mehrwertige Alkohole sind z.B. Trimethylolpropan, Glycerin, Sorbit und Pentaerythrit.

Bevorzugte Polycarbonsäuren II bzw. ihre Derivate IIa sind Dicarbonsäuren oder Dicarbonsäureanhydride, z.B. Maleinsäureanhydrid, Itaconsäure-(anhydrid), Fumarsäure, Phthalsäure(anhydrid), hydrierte Phthalsäure(anhydride), Adipinsäure, Bernsteinsäure, Malonsäure oder Valeriansäure. Auch eine Mischung der Carbonsäure(anhydride) ist möglich. Auch Hydroxycarbonsäuren oder mehr als difunktionelle Carbonsäuren können eingesetzt werden, z.B. Trimellitsäure oder Zitronensäure. Bevorzugt werden Dicarbonsäuren oder -anhydride eingesetzt, die α,ß-ungesättigte C=C-Doppelbindungen enthalten, z.B. Maleinsäureanhydrid.

Bevorzugte Hydroxyallylverbindungen III sind Trimethylolpropanmonoallylether, Trimethylolpropandiallylether, Pentaerithritdiallylether, Pentaerithrittriallylether, Glycerinmonoallylether und/oder Glycerindiallylether. Bevorzugt ist Trimethylolpropandiallylether. Auch Allylalkohol kann verwendet werden, ebenso Methallylverbindungen und Allylgruppen enthaltende Saccharidderivate.

Bevorzugte Isocyanate IV sind Isophorondiisocyanat, Hexamethylendiisocyanat, Dicyclohexylmethandiisocyanat, MDI (Diphenylmethandiisocyanat), TDI (Toluylendiisocyanat), Trans-1,4-cyclohexandiisocyanat und Para-phenylendiisocyanat. Alle genannten Diisocyanate können auch als präpolymere Isocyanate eingesetzt werden, z.B. als Biuret oder Uretdion (vergl. G. Oertel, Polyurethane, Carl-Hanser Verlage, 1985). Aliphatische oder cycloaliphatische Isocyanate sind insbesondere zur Verbesserung der Lichtstabilität geeignet.

Die Reaktion zwischen Isocyanat- und Hydroxylgruppen kann durch übliche Reaktionsbeschleuniger wie z.B. Dibutylzinndilaurat oder tertiäre Amine wie z.B. Dimethylbenzylamin oder Diazabicyclooctan katalysiert werden. Weiterhin kann das Reaktionsgemisch zur Verhinderung vorzeitiger Polymerisation der Allylgruppen Inhibitoren wie z.B. Hydrochinonderivate oder Phenothiacin enthalten. Die Herstellung kann in der zweiten Stufe in einem inerten Lösungsmittel erfolgen, das nach Beendigung der Reaktion (erkenntlich daran, daß im Infrarotspektrum des Reaktionsgemisches kein NCO-Signal mehr auftritt), wieder abdestilliert werden kann.

Besonders bevorzugte organische Lösungsmittel, in denen die erfindungsgemäßen Allylurethane gelöst werden können, sind Ester und Ketone, gegebenenfalls gemischt mit Kohlenwasserstoffen z.B. Butylacetat, Ethylacetat, Methoxypropylacetat, Ethylglykolacetat, Benzin, Toluol, Xylol, Limonen.

Die entstehenden Produkte sind geruchfreie oder nur schwach riechende Urethanallylether, die nach Zusatz von geeigneten Photoinitiatoren, wie z.B. Benzophenon/2-Hydroxy-2-methyl-1-phenyl-propan-1-on, und anschließender UV-Bestrahlung gehärtet werden können. Auch eine Polymerisation (Lackhärtung) mittels Peroxiden, Azoverbindungen oder Sikkativen (Schwermetallsalzen) ist möglich.

Die Viskosität derartiger Lackrohstoffe ist durch Zusatz inerter Verdünnungsmittel (Beispiel Ester wie Butylacetat, Ketone, Kohlenwasserstoffe) in weiten Bereichen einstellbar.

Die erfindungsgemäßen Produkte sind mit anderen ungesättigten Lackrohstoffen kombinierbar, wie z.B. mit ungesättigten Polyestern oder strahlenhärtbaren Reaktivverdünnern (Beispiel: Tripropylenglykoldiacrylat). Ebenso ist die Verwendung von Vinylethern (Beispiel: Tetraethylenglykoldivinylether) als Reaktivverdünner möglich, wobei sich als Photoinitiator z.B. Tribenzylsulfoniumhexafluorophosphat eignet. Ebenso ist das erfindungsgemäße Allylurethan mit anderen Lackrohstoffen, z.B. Nitrocellulose, Polyacrylaten oder Alkydharzen, Pigmenten oder Mattierungsmitteln, kombinierbar.

Beispiel 1

0,06 Mol Polyethylenglykol 400 (24 g),
0,11 Mol tripropyliertes Trimethylolpropan (34 g),
0,2 g Di-tertiär-Butylhydrochinon,
0,8 g konzentrierte Salzsäure und 0,153 g Mol Maleinsäureanhydrid (15 g)
werden in einem Erlenmeyerkolben unter Stickstoffeinleitung 1 h auf 180°C unter Rühren erhitzt. Das Kondensationswasser (2,7 ml) wird dabei entfernt. Zu dem auf diese Weise erzeugten hydroxylgruppenhaltigen Vorkondensat A wird nach Abkühlung
0,144 Mol Isophorondiisocyanat (32 g) sowie
0,144 Mol Trimethylolpropandiallylether (31 g)
gegeben, wobei man zunächst den Allylether dem Vorprodukt A zusetzt und anschließend das Diisocyanat in einer Geschwindigkeit eintropft, daß die Reaktionsmischung nicht wärmer als 80°C wird. Nach beendeter Zugabe erhitzt man noch 90 min unter Rühren auf 80°C und läßt anschließend das emulgierbare Allylurethan-Produkt abkühlen. Durch Einrühren in 90 ml Ethylacetat erhält man eine 60 %ige Lösung.

Nach Zusatz von 3 % (bezogen auf Festkörper) Fotoinitiator (Benzophenon/2-Hydroxy-2-methyl-1-phenylpropan-1-on = 1/2) und Auftragen auf Holz (2 x 15 µ Trockenschichtdicke mit Zwischenschliff) wird nach Verdunsten des Lösungsmittels und anschließender UV-Bestrahlung ein trübungsfreier, offenporiger, kratzfester Film erhalten. Die Beschichtung zeigt eine ausgezeichnete Fülle sowie einen guten Verlauf. Die Pendelhärte nach König (gemessen mit 54 µ Trockenschichtdicke auf Glas) beträgt 46 s. Der durch UV-Licht gehärtete, lichtbeständige Film ist beständig gegen die organischen Lösungsmittel Ethanol (60 min) und Aceton (10 s), entsprechend Beanspruchungsgruppe 1B, DIN 68 861, Teil 1, Ausgabe 12/81).

Beispiel 2

Es wird analog Beispiel 1 gearbeitet, jedoch mit dem Unterschied, daß folgende Rohstoffmengen eingesetzt werden:

Teilschritt A:

0,0675 Mol Polyethylenglykol 400 (27 g)
0,075 Mol tripropoxyliertes Trimethylolpropan (22,5 g)
0,13 Mol Maleinsäureanhydrid (12,5 g)
0,1 g Di-tertiär-butylhydrochinon
0,8 g konzentrierte Salzsäure

Teilschritt B:

0,1 Mol Trimethylolpropandiallylether (21,5 g)
0,1 Mol Hexamethylendiisocyanat (16,8 g)

Das Reaktionsprodukt ist in Ethylacetat löslich und läßt sich, wie in Beispiel 1 beschrieben, auf Glas bei einer Trockenschichtdicke von 54 µ zu glatten, kratzfesten Filmen mit einer Pendelhärte (nach König) von 60 s härten.

Nach Auftragen auf Holz (2 x 15 µ Trockenschichtstärke mit Zwischenschliff) wurden offenporige Beschichtungen erhalten, die sehr lichtbeständig sind. Die Beschichtungen zeigen zähelastische Eigenschaften, sind sehr abriebbeständig und beständig ggen Ethanol und Aceton (wie in Beispiel 1).

**Ansprüche**

1. In organischen Lösungsmitteln lösliche Allylurethane aus einer Allylverbindung, einem Polyol und einem Isocyanat, dadurch gekennzeichnet, daß sie erhältlich sind durch Umsatz von

A) einem Polyolgemisch I oder dessen Umsetzungsprodukt mit einer Polycarbonsäure II oder einem Derivat IIa davon mit

B) einer Hydroxyallylverbindung III und einem Isocyanat IV mit wenigstens zwei Isocyanatgruppen.

2. Allylurethane gemäß Anspruch 1, dadurch gekennzeichnet, daß eine nicht aromatische ungesättigte Carbonsäure II oder ein Derivat IIa davon mitverwendet wird.

3. Allylurethane nach wenigstens einem der vorhergehenden Ansprüche, erhältlich durch Umsetzung von0,15 Mol des Vorproduktes A aus

1. 0,03 - 0,1 Mol eines Polyethylenglykols mit einem Molekulargewicht von wenigstens 200, aber kleiner als 1000,

2. 0,00 - 0,3 Mol eines gegebenenfalls verzweigten Polypropylenglykols mit einem Molekulargewicht von 200 bis 1000 und

3. 0,0 - 0,25 Mol einer Polycarbonsäure II oder eines Derviates IIa davon
in einem Reaktionsschritt B mit

4. 0,05 - 0,35 Mol der Hydroxyallylverbindung III, und

5. 0,1 - 0,5 Mol NCO-Gruppen der Isocyanatverbindung IV,
wobei sämtliche Isocyanatgruppen mit Hydroxylgruppen umgesetzt werden.

4. Allylurethane gemäß wenigstens einem der vorhergehenden Ansprüche, dadurch gekennzeichnet, daß als Polycarbonsäure II bzw. Derivate IIa davon Maleinsäureanhydrid und/oder Adipinsäure, Fumarsäure, Malonsäure, Phthalsäure, Phthalsäureanhydrid, hydrierte Phthalsäurederivate, Itaconsäure, Bernsteinsäure, Valeriansäure, Trimellitsäureanhydrid und/oder Citronensäure eingesetzt wird.

5. Allylurethane gemäß wenigstens einem der vorhergehenden Ansprüche, dadurch gekennzeichnet, daß als Isocyanat III Isophorondiisocyanat, Hexamethylendiisocyanat, Dicyclohexylmethandiisocyanat, MDI, Trimethylhexamethylen-diisocyanat oder TDI eingesetzt wird.

6. Allylurethane gemäß wenigstens einem der vorhergehenden Ansprüche, dadurch gekennzeichnet, daß als Hydroxyallylverbindung III Trimethylolpropandiallylether und/oder Trimethylolpropanmonoallylether, Pentaerythrittriallylether, Glycerinmonoallylether, Glycerindiallylether, Pentaerythritdiallylether oder Allylalkohol eingesetzt wird.

7. Verfahren zur Herstellung eines Allylurethans gemäß Anspruch 1 durch Umsetzung
A) eines Polyglykolgemisches I oder dessen Umsetzungsproduktes mit einer Polycarbonsäure II oder eines Derivates IIa davon mit
B) einer Hydroxyallylverbindung III und einem Isocyanat IV mit wenigstens zwei NCO-Gruppen,
wobei die Umsetzung so erfolgt, daß keine NCO-Gruppen verbleiben und keine ionischen Gruppen im Allylurethan erhalten werden.

8. Verfahren zur Herstellung eines Lackes, dadurch gekennzeichnet, daß man ein Allylurethan gemäß wenigstens einem der vorhergehenden Ansprüche in wenigstens einem organischen Lösungsmittel löst und gegebenenfalls mit üblichen Additiven versieht.

9. Verfahren zur Lackierung starrer oder flexibler Substrate, dadurch gekennzeichnet, daß man einen gemäß Anspruch 8 erhaltenen Lack verwendet.